# EUROPÄISCHE PATENTSCHRIFT

(11) **EP 0 838 625 B1**
(45) Veröffentlichungstag und Bekanntmachung des Hinweises auf die Patenterteilung: **19.12.2001**
(21) Anmeldenummer: 97115670.8
(22) Anmeldetag: 10.09.1997
(51) Int. Cl.: F16L 37/084, F16L 37/12, F16L 37/28, F16L 55/10, E03C 1/08

(54) **Kupplungseinrichtung zur Verbindung zweier Rohrelemente**
Connecting arrangement for joining two pipe end sections
Dispositif de raccordement pour la connexion de deux éléments de tuyaux

(30) Priorität: 12.09.1996 DE 19637074
(43) Veröffentlichungstag der Anmeldung: 29.04.1998
(73) Patentinhaber: Hansgrohe AG, 77761 Schiltach (DE)
(72) Erfinder: Schorn, Franz, 77761 Schiltach (DE)
(74) Vertreter: Patentanwälte Ruff, Wilhelm, Beier, Dauster & Partner

(56) Entgegenhaltungen:
- FR-A- 2 658 899
- US-A- 1 910 152
- US-A- 2 076 918

## Beschreibung

Die Erfindung geht aus von einer Kupplungseinrichtung zur Verbindung zweier Rohr- bzw. Schlauchelemente, durch die Wasser strömt. Insbesondere betrifft die Erfindung die Verbindung zweier sanitärer wasserführender Elemente.

Zur Verbindung zweier solcher Elemente, beispielsweise eines Schlauchs und einer Handbrause, sind Schraubverbindungen bekannt. Hierzu wird beispielsweise eine am Ende des Schlauchs angeordnete Überwurfmutter auf ein Außengewinde der Handbrause aufgeschraubt.

Ebenfalls bekannt sind Bajonettverschlüsse, bei denen ein Nippel zunächst geradlinig in eine Buchse eingeführt und anschließend rechtwinklig zu der geraden Einführbewegung verdreht wird. Hier muß der Benutzer zur Herstellung der Verbindung also zwei deutlich voneinander getrennte Bewegungen durchführen. Im gekoppelten Zustand weist der Nippel gegenüber dem Griff der Handbrause eine geänderte Drehposition auf.

Ebenfalls bekannt sind Steckkupplungen, bei denen zur Verriegelung ein senkrecht zur Achse der beiden zu verbindenen Teile bewegbarer Schieber vorhanden ist. Dieser wird üblicherweise von einer Feder, bei der es sich um ein angeformtes Teil des Schiebers handeln kann, in die Verriegelungsposition beaufschlagt. In dieser Verriegelungsposition steht die Feder noch unter Spannung.

Es ist bereits eine Kupplungseinrichtung zum Verbinden zweier Rohr- bzw. Schlauchelemente bekannt (US-A-2 076 918), bei der das Kupplungselement axial verschiebbar ist. Zum Herstellen der Verbindung wird das Kupplungselement gegen die Wirkung einer Feder verschoben, und der zu kuppelnde Nippel in eine Art Bajonettführung eingeschoben. Zum Verriegeln wird das Kupplungselement losgelassen, so dass es am Ende seines Bewegungswegs zwei Zapfen festlegt.

Der Erfindung liegt die Aufgabe zugrunde, eine Kupplungseinrichtung zum Verbinden zweier Rohr- bzw. Schlauchelemente zu schaffen, die bei einfachem Aufbau einfach zu bedienen ist.

Zur Lösung dieser Aufgabe schlägt die Erfindung eine Kupplungseinrichtung mit den im Anspruch 1 genannten Merkmalen vor. Weiterbildungen der Erfindung sind Gegenstand von Unteransprüchen.

Die Erfindung schafft eine einfach aufgebaute Kupplungseinrichtung, die sehr einfach zu bedienen ist und weitere Gebrauchsvorteile aufweist.

Das Nippelelement kann beispielsweise am Schlauchende oder an einem Rohrende angeschraubt werden oder mit diesem direkt verbunden sein.

Das Buchsenelement kann beispielsweise das Ende eines Brausegriffs sein. Selbstverständlich ist auch die umgekehrte Anordnung bzw. Ausbildung möglich. Das Kupplungselement ist an dem Nippelelement oder dem Buchsenelement angeordnet, während das Gegenelement an dem jeweils anderen Element angebracht ist.

In Weiterbildung der Erfindung kann vorgesehen sein, daß das Kupplungselement um die gemeinsame Achse von Kupplungsnippelelement und Kupplungsbuchsenelement verdrehbar angeordnet ist. Es wird hiermit die Sicht bei Rohr- bzw. Schlauchelementen anbietende Drehbewegung mit der geradlinigen Steckbewegung kombiniert.

Bei der von der Erfindung vorgeschlagenen geradlinigen Bewegung läßt sich das Nippelelement sehr einfach in das Buchsenelement einführen, so daß auch ein ungeübter Benutzer keinen Schwierigkeiten gegenübersteht.

Erfindungsgemäß kann das Kupplungselement federbeaufschlagt sein, wobei sowohl eine getrennte Feder als auch eine federnde Ausbildung eines Teils des Kupplungselements in Frage kommt.

Erfindungsgemäß kann vorgesehen sein, daß das Kupplungsgegenelement mehrere über den Umfang verteilte insbesondere feste bzw. einstückig eingeformte Sperrzähne aufweist. Diese Sperrzähne können derart mit dem Kupplungselement zusammenwirken, daß in eingekuppeltem Zustand das Kupplungselement an der Rückseite der Sperrzähne angreift.

Insbesondere kann vorgesehen sein, daß das jeweils andere Element Führungsnuten für die Sperrzähne aufweist. Dadurch wird die lineare Einschubbewegung des Nippels in die Buchse unterstützt und geführt. Bei Vorhandensein mehrerer Nuten und mehrerer Sperrzähne kann der Nippel gegebenenfalls in mehreren Positionen eingeführt werden.

Erfindungsgemäß kann in Weiterbildung vorgesehen sein, daß das Kupplungselement und/oder das Gegenelement derart ausgebildet sind, daß bei Einführen des Nippelelements in das Buchsenelement das Kupplungselement in die Freigabestellung bewegt wird. Insbesondere kann diese Ausbildung an den Sperrzähnen vorgesehen sein, die beispielsweise mindestens teilweise eine Keilform aufweisen können.

Die Erfindung schlägt vor, daß das Kupplungselement in seiner Sperrstellung, in der es das Herausnehmen des Nippelelements aus dem Buchsenelement verhindert, noch weiter in der gleichen Betätigungsrichtung verstellt werden kann. Während also beispielsweise zum Herstellen der Verriegelung aus der Freigabestellung eine kleine Drehung um einige wenige Winkelgrade ausreichen kann, kann also das Kupplungselement in der gleichen Drehrichtung noch deutlich weiter verdreht werden, beispielsweise um knapp 90°. Diese Weiterbewegung kann zur Vornahme zusätzlicher Betätigungen ausgenutzt werden.

Insbesondere kann vorgesehen sein, daß das Kupplungselement mit einem Betätigungselement, beispielsweise einem Betätigungsknopf, versehen ist, an dem der Benutzer zum Verstellen des Kupplungselements angreift. Der übrige Teil des Kupplungselements ist dann von außen nicht zugänglich.

Erfindungsgemäß kann vorgesehen sein, daß das Kupplungselement mit einem Zusatzelement des Kupplungsnippelelements oder des Kupplungsbuchsenelements in Verbindung steht oder bei Herstellung der Kupplung in Verbindung gebracht werden kann. Dieses Zusatzelement kann dann, sobald das Kupplungselement die Kupplung verriegelt, durch weiteres Verstellen des Kupplungselements betätigt werden. In diesem weiteren Verstellbereich wirkt das Kupplungselement also zusätzlich noch als Verstellelement. Es kann dabei mit dem gleichen Betätigungsknopf betätigt werden, mit dem es auch zur Herstellung bzw. Aufhebung der Verriegelung betätigt wird.

Bei dem Zusatzelement kann es sich beispielsweise um eine Drossel handeln, die in dem Kupplungsnippel eingebaut sein kann. Die Drossel kann beispielsweise durch eine Verdrehung um die Achse des Nippels verstellt werden, wozu ein Betätigungsstift durch die Wand des Kupplungsnippels abgedichtet nach außen ragt. Der nach außen ragende Teil der Drosselverstellung kann dann mit dem Kupplungselement in Eingriff gebracht werden. Dies geschieht beispielsweise durch Einstecken des Kupplungsnippelelements in das Buchsenelement.

Insbesondere kann vorgesehen sein, daß das Kupplungselement einen in einer Ringnut geführten Ring aufweist. Auf diese Weise wird für eine sichere Lagerung und Führung des Rings mit geringem axialem Spiel gesorgt. Das Ringelement kann über fast seine gesamte Stirnfläche an der Seitenwand der Ringnut anliegen. Es treten dadurch nur geringe Flächenpressungen auf.

Insbesondere kann der Ring axial durchgehende Vertiefungen für die Sperrzähne des Kupplungsgegenelements aufweisen.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: Einen abgebrochenen Längsschnitt durch eine Kupplungseinrichtung nach der Erfindung in zusammengesetztem Zustand;
- Fig. 2: einen abgewinkelten Querschnitt längs Linie II-II Fig. 1;
- Fig. 3: eine der Fig. 1 entsprechende Seitenansicht des Kupplungsnippels;
- Fig. 4: einen Schnitt etwa längs Linie IV-IV durch das Kupplungsbuchsenelement;
- Fig. 5: eine der Fig. 4 entsprechende Seitenansicht des Kupplungselements, teilweise geschnitten;
- Fig. 6: eine der Fig. 2 entsprechende Darstellung bei weiter verdrehtem Kupplungselement;
- Fig. 7: eine der Position der Fig. 6 entsprechende teilweise abgebrochene Seitenansicht des Buchsenelements der Kupplung;
- Fig. 8: einen Schnitt längs Linie VIII-VIII durch die Anordnung der Fig. 1;
- Fig. 9: eine Seitenansicht des Buchsenelements der Kupplung bei der Stellung des Kupplungselements in Fig. 8.

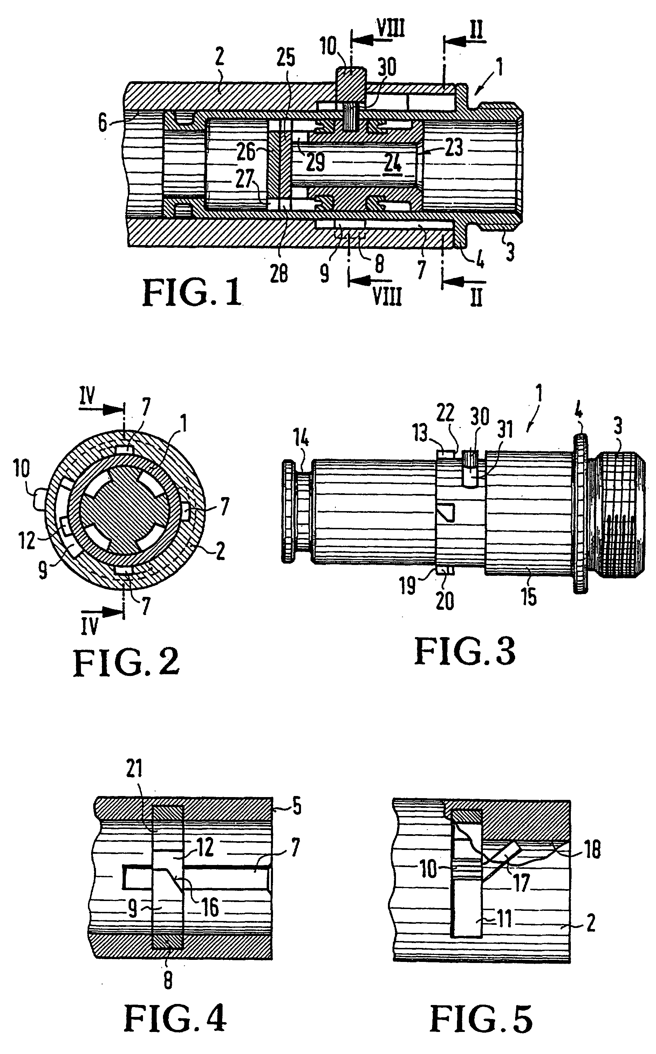

Fig. 1 zeigt einen Längsschnitt durch einen Kupplungsnippel 1, der in eine Kupplungsbuchse 2 eingesetzt und eingekuppelt ist. Der Kupplungsnippel ist an seinem in Fig. 1 rechten Ende mit einem Außengewinde 3 versehen, mit dem er beispielsweise an das Ende eines Brauseschlauchs angeschraubt werden kann.

An das Außengewinde 3 anschließend weist der Kupplungsnippel 1 einen radial nach außen gerichteten Flansch 4 auf, der im eingekuppelten Zustand an der Stirnfläche 5 der Kupplungsbuchse 2 anliegt. Bei der Kupplungsbuchse 2 kann es sich beispielsweise um den Handgriff einer Handbrause handeln. Die Kupplungsbuchse 2 weist in ihrem Inneren eine Öffnung 6 auf, deren Innendurchmesser über eine größere Länge dem Außendurchmesser des Kupplungsnippels 1 entspricht. Dadurch ist der Kupplungsnippel 1 im wesentlichen spielfrei in der Kupplungsbuchse 2 aufgenommen. Die Innenöffnung 6 der Kupplungsbuchse 2 weist im Bereich ihres äußeren, durch die Stirnfläche 5 begrenzten Endes mehrere in Axialrichtung verlaufende Nuten 7 sowie eine die Axialnuten schneidende umlaufende Ringnut 8 auf. In der Ringnut 8 ist ein Ringelement 9 eingesetzt, das um die Längsachse der Kupplungsbuchse 2 verdreht werden kann. Das Ringelement 9 weist eine Breite auf, die der Breite der Ringnut 8 gleich ist. Dadurch ist das Ringelement 9 in der Ringnut 8 in Axialrichtung spielfrei geführt. Das Ringelement 9 weist an einer Stelle einen Betätigungsknopf 10 auf, der durch einen sich über einen Bogen erstreckenden Schlitz 11 in der Wand der Kupplungsbuchse 2 hindurchgreift. Der Betätigungsknopf 10 ist daher von der Außenseite der Kupplungsbuchse 2 her zugänglich, siehe oben in Fig. 1, während das Ringelement 9 vollständig innerhalb der Kupplungsbuchse 2 angeordnet und untergebracht ist. Das Ringelement 9 bildet zusammen mit seiner Lagerung in der Ringnut 8 ein Kupplungselement, mit dem der Kupplungsnippel 1 in der Kupplungsbuchse 2 gekuppelt und verriegelt werden kann.

Fig. 2 zeigt nun einen abgewinkelten Querschnitt längs der Linie II-II in Fig. 1. Es ist zu sehen, daß in der Kupplungsbuchse 2 insgesamt vier Längsnuten 7 vorhanden sind, die sich in Axialrichtung erstrecken und gleichmäßig über einen Umfang verteilt angeordnet sind. Eine der Längsnuten 7 wird durch das Ringelement 9 abgedeckt. Auch das Ringelement weist querverlaufende Nuten 12 auf, die bei entsprechender Stellung des Ringelements 9 in Deckung mit den Längsnuten 7 gebracht werden können.

Während das Ringelement 9 zusammen mit seiner Führung 8 das Kupplungselement bildet, das verstellt werden kann, im vorliegenden Fall verdreht werden kann, weist der Kupplungsnippel 1 ein Kupplungsgegenelement auf, das von vier Sperrzähnen 13 gebildet wird. Die Sperrzähne 13 weisen eine den Längsnuten 7 entsprechende Positionierung und Größe auf.

Der Kupplungsnippel 1 weist im Bereich seines in das Innere der Kupplungsbuchse 2 hineingerichteten Endes, in Fig. 3 links, eine umlaufende Ringnut 14 zur Aufnahme eines O-Rings auf. Dieser O-Ring dient zur Abdichtung gegenüber der Kupplungsbuchse 2. Etwa in der Mitte seiner Längserstreckung weist der Kupplungsnippel 1 die bereits erwähnten Sperrzähne 13 auf. An das durch die Sperrzähne 13 gebildete Kupplungsgegenelement schließt sich mit einem gewissen axialen Abstand ein Abschnitt 15 mit größerem Durchmesser an, der zur Führung des Kupplungselements 1 innerhalb der Kupplungsbuchse 2 dient. Dieser Bereich 15 mit dem etwas vergrößerten Durchmesser reicht bis an den Ringflansch 4 heran.

Nun zu Fig. 4. Fig. 4 zeigt einen Längsschnitt durch die Kupplungsbuchse 2 etwa längs Linie IV-IV in Fig. 2. Es ist zu sehen, daß die Längsnuten 7, von denen in Fig. 1 der Einfachheit halber nur eine einzige dargestellt ist, die das Ringelement 9 aufnehmende Ringnut 8 überqueren und sich jenseits des Ringelements 9 noch über eine bestimmte Strecke weiter erstrecken. Die Länge dieses hinteren Abschnitts der Längsnuten 7 entspricht dabei mindestens der axialen Erstreckung der Sperrzähne 13.

Die das Ringelement 9 durchquerenden Quernuten 12 weisen im Bereich ihrer dem äußeren Ende der Kupplungsbuchse 2 zugewandten Vorderseite eine Schrägfläche 16 auf.

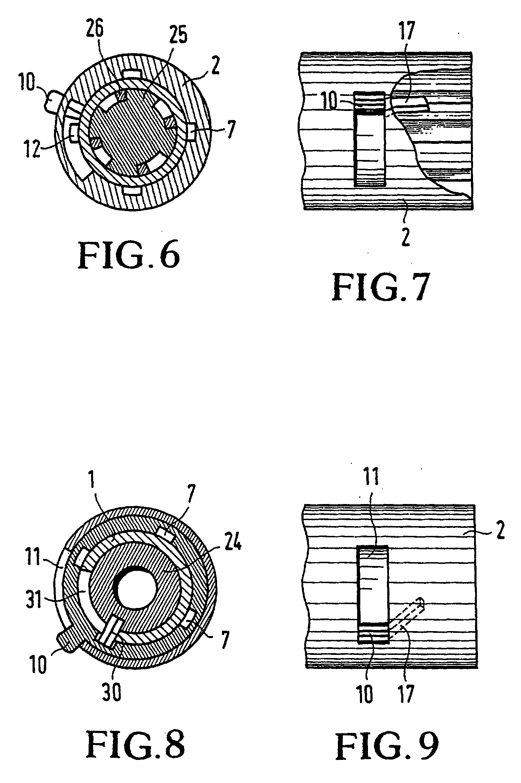

Das Ringelement 9 weist, siehe Fig. 5, eine einseitig angeformte abkragende Feder 17 auf. Diese kann mit einer Anschlagfläche 18 in der Kupplungsbuchse 2 zusammenwirken. Wird das Ringelement 9 mit Hilfe des Betätigungsknopfs 10 aus der Position, die in Fig. 5 dargestellt ist, weiter verdreht, indem der Betätigungsknopf 10 in Fig. 5 nach oben geschoben wird, so führt dies zu einer Verformung der Feder 17, siehe die Position in Fig. 7. Aus dieser Position versucht die durch die Verformung der Feder 17 entstehende Rückstellkraft, das Ringelement 9 in die in Fig. 4 und 5 dargestellte Position zurückzustellen.

Geht man von der in Fig. 4 und 5 dargestellten Position aus, so muß man, wenn man die Kupplung einkuppeln will, den Kupplungsnippel 1 in die Kupplungsbuchse 2 in axialer Richtung einschieben. Dabei müssen die Sperrzähne 13 mit den Längsnuten 7 ausgerichtet werden, um den Kupplungsnippel weiter einschieben zu können. Die Sperrzähne 13 gleiten die Längsnuten 7 entlang, bis sie mit ihren Vorderkanten 19, an denen ebenfalls je eine Schrägfläche 20 angeorndet ist, an den Schrägflächen 16 der Quernuten 12 des Ringelements 9 anliegen. Bei weiterem Einschieben bewirken die Schrägflächen eine Verdrehung des Ringelements 9 gegen die Rückstellkraft der Feder 17, bis die Sperrzähne 13 durch die Quernuten 12 hindurch in den hinteren Bereich der Längsnuten 7 hinter der Hinterkante 21 des Ringelements 9 liegen. Sobald die in Einschiebrichtung hinteren Kanten 22 der Sperrzähne 13 an der Hinterkante 21 des Ringelements 9 vorbeigelangt sind, verdreht die Feder 17 das Ringelement 9 wieder bis in die in Fig. 4 dargestellte Sperrstellung, an der die erwähnten Hinterkanten 22 der Sperrzähne 13 durch das Ringelement 9 festgehalten werden. In dieser Position liegt auch der Flansch 4 an der Stirnfläche 5 der Kupplungsbuchse 2 an. Die Kupplung ist damit hergestellt und verriegelt. Aus dieser Position, siehe die Figuren 4 und 5, kann nun das das Kupplungselement bildende Ringelement 9 in der gleichen Betätigungsrichtung noch weiter verdreht werden, was in Fig. 5 und 7 einer Abwärtsbewegung des Betätigungsknopfs 10 entspricht. Dies wird durch die Feder 17 weder behindert noch erschwert, da diese nur bei Verdrehung in umgekehrter Richtung an der Anschlagfläche 18 anliegt. Diese maximale Extremposition des Kupplungselements bzw. des Betätigungsknopfs 10 ist in Fig. 9 dargestellt, wo der Betätigungsknopf 10 an dem entgegengesetzten Ende des Schlitzes 11 der Kupplungsbuchse 2 anliegt. Die Position der Feder 17 ist gestrichelt dargestellt.

Wie man insbesondere der Fig. 1 entnehmen kann, enthält der Kupplungsnippel 1 zusätzlich noch eine verstellbare Drosseleinrichtung 23. Die Drosseleinrichtung 23 enthält ein verstellbares Drosselelement 24, das als verdrehbare Hülse ausgebildet ist. Die Hülse des Drosselelements 24 ist auf der Wassereintrittsseite, in Fig. 1 rechts, offen. Auf der gegenüberliegenden Seite ist sie durch eine Endwand 25 abgeschlossen, mit der sie an einer festen Querwand 26 des Kupplungsnippels 1 anliegt. Die Querwand 26 weist mehrere bogenförmige Öffnungen 27 längs ihres äußeren Umfangs auf.

Auch die Endwand 25 des Drosselelements 24 weist längs ihres Umfangs mehrere bogenförmige Öffnungen 28 auf. Die bogenförmigen Öffnungen 27, 28 erstrecken sich über einen Winkel von etwa 45°.

In Strömungsrichtung gesehen vor der Endwand 25 enthält die Hülse des Drosselelements 24 mehrere radial verlaufende Öffnungen 29, durch die das Wasser aus dem Inneren der Hülse nach außen und damit zu den bogenförmigen Öffnungen 28 fließen kann.

Zum Verdrehen des Drosselelements 24 in Umfangsrichtung enthält das Drosselelement 24 einen Stift 30, der sich durch einen abgedichteten Schlitz 31 hindurch auf die Außenseite des Nippels 1 erstreckt, siehe insbesondere Fig. 3 oben. Mit Hilfe des Stifts 30 kann das Drosselelement 24 innerhalb des Kupplungsnippels 1 verdreht werden, wobei je nach Stellung des Drosselelements 24 die bogenförmigen Öffnungen 27, 28 übereinstimmen, siehe Fig. 2, oder teilweise nicht übereinstimmen, siehe Fig. 6. Eine vollständige Übereinstimmung der bogenförmigen Öffnungen, wie in Fig. 2 dargestellt ist, entspricht einer minimalen Drosselung, während eine Verdrehung und damit eine Verringerung des Öffnungsquerschnitts eine Drosselung darstellt, siehe Fig. 6.

Zum Betätigen des Stifts 30 dient das Ringelement 9, das gleichzeitig die Kupplung bildet. Beim Einschieben des Kupplungsnippels 1 gerät der Stift 30 in die Quernut 12 des Ringelements 9, wobei er in axialer Richtung nach vollständigem Einschieben des Kupplungsnippels 1 und dessen Verriegelung weiterhin in der Quernut 12 angeordnet ist. Dies geht beispielsweise aus Fig. 8 hervor, die einen Schnitt längs Linie VIII-VIII in Fig. 1 darstellt. Mit Hilfe des Betätigungselements 10 kann also durch Verdrehen in dem Bereich, in dem das Ringelement 9 die Sperrzähne 13 verriegelt, eine Verdrehung des Drosselelements 24 durchgeführt werden. Dabei wird der Betätigungsknopf 10 in der gleichen Richtung bewegt, d. h. verdreht, wie beim Verriegeln. Der Benutzer kann durch Rechts- oder Linksdrehen die Drosselung mehr oder weniger stark wählen. Sobald er in den Bereich gerät, wo eine Entriegelung stattfinden könnte, merkt er dies durch den zunehmenden Widerstand aufgrund der Verformung der Feder 17.

Die Erfindung schafft also eine Kupplungseinrichtung, die im Prinzip aus drei Teilen besteht, nämlich einem Kupplungsnippel 1, einer Kupplungsbuchse 2 und einem verdrehbaren Kupplungselement, gebildet durch das Ringelement 9. Die Kupplungshülse 2 ist einstückig, der Kupplungsnippel 1 ist ebenfalls mit Ausnahme der Drosseleinrichtung 23 einstückig, und das Kupplungselement, nämlich das Ringelement 9 zusammen mit dem Betätigungsknopf 10, sind ebenfalls einstückig. Dadurch wird eine einfach aufgebaute und daher robuste Kupplungseinrichtung geschaffen.

Mit Hilfe dieser Kupplungseinrichtung kann dann zusätzlich noch das Zusatzelement, im dargestellten Beispiel die Drosseleinrichtung 23, betätigt werden. Selbstverständlich kann auf diese Weise, nämlich durch Verdrehen des Kupplungselements in dem gekuppelten Bereich, auch eine andere Zusatzeinrichtung betätigt werden, beispielsweise ein Ventil zum mehr oder weniger starken Öffnen einer Seifeneinspeisung oder dergleichen.

## Patentansprüche

1. Kupplungseinrichtung zur Verbindung zweier Rohr- bzw. Schlauchelemente, mit
1.1 einem Nippelelement (1), das
1.1.1 einem der beiden Rohr- bzw. Schlauchelemente zugeordnet ist,
1.2 einem Buchsenelement (2), das
1.2.1 dem jeweils anderen Rohr- bzw. Schlauchelement zugeordnet ist und
1.2.2 eine zur Aufnahme des Nippelelements (1) ausgebildete Innenöffnung (6) aufweist, sowie mit
1.3 einem Kupplungselement, das
1.3.1 an dem Nippelelement (1) oder dem Buchsenelement (2) angeordnet ist,
1.3.2 bei in das Buchsenelement (2) eingesetztem Nippelelement (1) durch Zusammenwirken mit einem Kupplungsgegenelement an dem jeweils anderen Element das Entkuppeln der beiden Elemente verhindert und
1.3.3 gegen eine Beaufschlagungskraft in eine Freigabestellung bewegbar ist, **dadurch gekennzeichnet, dass** das Kupplungselement in seiner Sperrstellung in seiner Betätigungsrichtung weiter verstellt werden kann.

2. Kupplungseinrichtung nach Anspruch 1, bei der das Kupplungselement um die gemeinsame Achse von Kupplungsnippelelement (1) und Kupplungsbuchsenelement (2) verdrehbar angeordnet ist.

3. Kupplungseinrichtung nach Anspruch 1 oder 2, bei der das Nippelelement (1) linear in das Buchsenelement (2) eingeführt wird.

4. Kupplungseinrichtung nach einem der vorhergehenden Ansprüche, bei der das Kupplungselement federbeaufschlagt ist.

5. Kupplungseinrichtung nach einem der vorhergehenden Ansprüche, bei der das Kupplungsgegenelement mehrere über den Umfang verteilte insbesondere festangeordnete Sperrzähne (13) aufweist.

6. Kupplungseinrichtung nach einem der vorhergehenden Ansprüche, bei der das jeweils andere Element Führungsnuten (7) für die Sperrzähne (13) aufweist.

7. Kupplungseinrichtung nach einem der vorhergehenden Ansprüche, bei der das Kupplungselement und/oder das Kupplungsgegenelement derart ausgebildet ist, dass bei Einführen des Nippels (1) in die Kupplungsbuchse (2) das Kupplungselement in die Freigabestellung bewegt wird.

8. Kupplungseinrichtung nach einem der vorhergehenden Ansprüche, bei der das Kupplungselement nur mit Hilfe eines Betätigungselements (10) zugänglich ist.

9. Kupplungseinrichtung nach einem der vorhergehenden Ansprüche, bei der das Kupplungselement mit einer Zusatzeinrichtung (23) des Kupplungsnippelelements (1) oder des Kupplungsbuchsenelements (2) in Verbindung steht oder bei Einsetzen des Kupplungsnippelelements (1) in das Kupplungsbuchsenelement (2) in Verbindung bringbar ist.

10. Kupplungseinrichtung nach Anspruch 9, bei der die Zusatzeinrichtung (23) mit Hilfe des Kupplungselements in verriegeltem Zustand der Kupplungseinrichtung verstellbar ist.

11. Kupplungseinrichtung nach einem der vorhergehenden Ansprüche, bei der das Kupplungselement ein in einer Ringnut (8) geführtes Ringelement (9) aufweist.

12. Kupplungseinrichtung nach Anspruch 11, bei der das Ringelement (9) axial durchgehende Quernuten (12) für das Kupplungsgegenelement aufweist.

## Claims

1. A coupling means for connecting two rigig or flexible tubular elements, comprising
1.1 a nipple element (1)
1.1.1 assigned to one of the two rigid or flexible tubular elements,
1.2 a bush element (2)
1.2.1 assigned respectively to the other rigid or flexible tubular element and
1.2.2 an internal opening (6) configured to receive said nipple element (1) as well as comprising
1.3 a coupling element
1.3.1 arranged on said nipple element (1) or said bush element (2),
1.3.2 said nipple element (1) being inserted into said bush element (2) preventing uncoupling of said two elements by cooperation with a coupling mating element at said respective other element and
1.3.3 being movable into a release position against an urging force, **characterized in that** in its latched position said coupling element can be further adjusted in its direction of rotation.

2. The coupling means as set forth in claim 1, wherein said coupling element is arranged to rotate about the common axis of said coupling nipple element (1) and coupling bush element (2).

3. The coupling means as set forth in claim 1 or 2, wherein said nipple element (1) is introduced linearly into said bush element (2).

4. The coupling means as set forth in any of the preceding claims, wherein said coupling element is spring loaded.

5. The coupling means as set forth in any of the preceding claims, wherein said coupling mating element comprises several ratchet teeth (13) distributed, more particularly fixedly arranged, circumferentially.

6. The coupling means as set forth in any of the preceding claims, wherein each other element comprises guiding grooves (7) for said ratchet teeth (13).

7. The coupling means as set forth in any of the preceding claims, wherein said coupling element and/or said coupling mating element is configured such that on introducing said nipple (1) into said coupling bush (2) said coupling element is moved into the release position.

8. The coupling means as set forth in any of the preceding claims, wherein said coupling element is accessible ony with the aid of an actuating element (10).

9. The coupling means as set forth in any of the preceding claims, wherein said coupling element is in connection with an additional means (23) of said coupling nipple element (1) or said coupling bush element (2) or is connectable on insertion of said coupling nipple element (1) into said coupling bush element (2).

10. The coupling means as set forth in claim 9, wherein said additional means (23) is adjustable with the aid of said coupling element in the latched condition of said coupling means.

11. The coupling means as set forth in any of the preceding claims, wherein said coupling element comprises a ring element (9) guided in an annular groove (8).

12. The coupling means as set forth in claim 11, wherein said ring element (9) comprises axial full-length transverse grooves (12) for said coupling mating element.

## Revendications

1. Dispositif de raccordement pour la connexion de deux éléments de tuyaux flexibles comprenant
1.1 un élément de raccord nipple (1) qui
1.1.1 est associé à l'un des deux éléments de tuyau flexible,
1.2 un élément formant douille (2)
1.2.1 qui est associé à l'autre élément de tuyau et
1.2.2 qui présente une ouverture interne (6) destinée au logement de l'élément de raccord nipple (1) ainsi
1.3 qu'un élément de raccord qui
1.3.1 est disposé sur l'élément de raccord nipple (1) ou sur l'élément de douille (2),
1.3.2 avec l'élément de raccord nipple (1) introduit dans l'élément de douille (2) par coopération avec un élément opposé de raccord le désaccouplement des deux éléments est évité et
1.3.3 l'élément de raccord étant mobile dans une position de déverrouillage à l'encontre d'une force d'impact, **caractérisé en ce que** l'élément de raccord dans sa position de blocage peut être déplacé plus loin dans sa direction d'actionnement.

2. Dispositif de raccordement selon la revendication 1, où l'élément de raccord est disposé autour de l'axe commun de l'élément de raccord fileté (1) et de l'élément de raccord formant douille (2).

3. Dispositif de raccord selon la revendication 1 ou 2, où l'élément de raccord nipple (1) est introduit de manière linéaire dans l'élément formant douille (2).

4. Dispositif de raccord selon l'une des revendications précédentes, où l'élément de raccordement subit l'impact d'une force de ressort.

5. Dispositif de raccord selon l'une des revendications précédentes, où l'élément de raccordement présente plusieurs dents de blocage (13) disposées fixement et réparties sur la périphérie.

6. Dispositif de raccord selon l'une des revendications précédentes, où l'autre élément présente des rainures de guidage (7) pour les dents de blocage (13).

7. Dispositif de raccord selon l'une des revendications précédentes, où l'élément de raccordement et/ou l'élément antagoniste de raccordement sont conçus de sorte que lors de l'introduction du raccord nipple (1) dans la douille de raccordement (2), l'élément de raccordement soit déplacé dans sa position de déverrouillage.

8. Dispositif de raccord selon l'une des revendications précédentes, où l'élément de raccordement n'est accessible qu'à l'aide d'un élément d'actionnement (10).

9. Dispositif de raccord selon l'une des revendications précédentes, où l'élément de raccordement est relié avec un dispositif supplémentaire (23) de l'élément de raccord fileté (1) ou de l'élément de raccord formant douille (2) ou peut être relié lors de l'introduction de l'élément de raccord fileté (1) dans l'élément de raccord formant douille (2).

10. Dispositif de raccordement selon la revendication 9, où le dispositif supplémentaire (23) peut être déplacé à l'aide de l'élément de raccordement dans l'état verrouillé du dispositif de raccordement.

11. Dispositif de raccord selon l'une des revendications précédentes, où l'élément de raccordement présente un élément annulaire (9) introduit dans une rainure annulaire (8).

12. Dispositif de raccordement selon la revendication 11, où l'élément annulaire (9) présente des rainures transversales axialement continues (12) pour l'élément antagoniste de raccordement.
